# EUROPEAN PATENT SPECIFICATION

(11) **EP 3 261 231 B1**
(45) Date of publication and mention of the grant of the patent: **06.04.2022**
(21) Application number: 17173846.1
(22) Date of filing: 31.05.2017
(51) Int. Cl.: H02K 13/00, H02K 13/02, H01R 39/34, H01R 39/08

(54) **CONNECTING ELEMENT FOR AN ALTERNATOR OF AN ELECTRIC ENERGY PRODUCTION PLANT AND ALTERNATOR COMPRISING SAID CONNECTING ELEMENT**
VERBINDUNGSELEMENT FÜR EINEN WECHSELSTROMGENERATOR EINER STROMERZEUGUNGSANLAGE UND WECHSELSTROMGENERATOR MIT DIESEM VERBINDUNGSELEMENT
ÉLÉMENT DE CONNEXION POUR UN ALTERNATEUR D'UNE INSTALLATION DE PRODUCTION D'ÉNERGIE ÉLECTRIQUE ET ALTERNATEUR COMPRENANT LEDIT ÉLÉMENT DE CONNEXION

(30) Priority: 31.05.2016 IT UA20163998
(43) Date of publication of application: 27.12.2017
(73) Proprietor: Ansaldo Energia S.p.A., 16152 Genova (IT)
(72) Inventor: MACELLONI, Paolo, 16167 Genova (IT); DI LIDDO, Sergio, 16142 Genova (IT)
(74) Representative: Andreotti, Erika

(56) References cited:
- EP-A1- 0 601 826
- EP-A1- 2 747 255
- EP-B1- 2 747 255
- WO-A1-2011/009901
- JP-A- H0 595 653
- US-A1- 2013 038 154
- US-B1- 6 383 000

## Description

The invention relates to a connecting element for an alternator and to an alternator for an electric energy production plant.

In particular, the invention relates to an alternator using a gas cooling system or a mixed gas/water cooling system. Examples of alternators of this kind are disclosed in documents WO 2011009901 and JPH0595653.

When designing alternators having a gas cooling system, manufacturers aim at avoiding the leaking of cooling gases into given areas of the alternator.

In particular, in case a highly inflammable gas is used, such as for example a hydrogen mixture, manufacturers have to avoid the leaking of the gas into areas where there can be sparkles or sparks.

Therefore, it is an object of the invention to provide a connecting element, which is capable of avoiding the leaking of the cooling gas and of ensuring an optimal sealing in all the operating conditions of the machine.

According to this object, the invention relates to a connecting element for an alternator of an electric energy production plant according to claim 1.

Furthermore, it is an object of the invention to provide an alternator for the production of electric energy, which is safe and reliable; in particular, it is an object of the invention to provide an alternator, in which the circulation of the cooling gas is properly controlled in order to avoid the leaking of the cooling gas into areas where a flame can be generated.

According to these objects, the invention relates to an alternator for an electric energy production plant according to claim 9.

Further features and advantages of the invention will be best understood upon perusal of the following description of a non-limiting embodiment thereof, with reference to the accompanying drawing, wherein:
- figure 1 is a schematic representation, with cross-sectional parts and parts removed for greater clarity, of an alternator according to the invention;
- figure 2 is a schematic representation, with cross-sectional parts and parts removed for greater clarity, of a first detail of the alternator of figure 1;
- figure 3 is a schematic representation, with cross-sectional parts and parts removed for greater clarity, of a second detail of the alternator of figure 1.

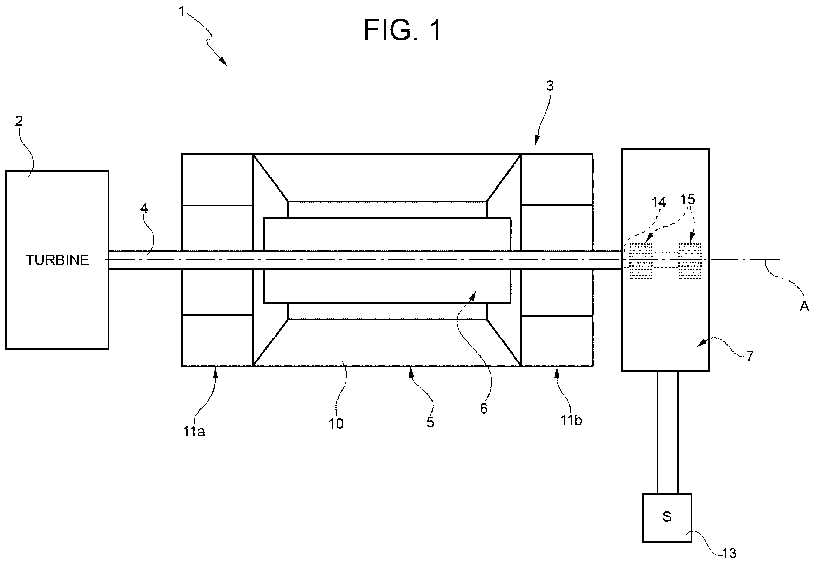

In figure 1, number 1 indicates a portion of an electric energy production plant comprising a rotating turbine 2 (schematically shown in figure 1) and an alternator 3, which is dragged by the turbine 2 and is designed to transform the rotary motion caused by the turbine 2 into electric energy.

The alternator 3 extends along a longitudinal axis A and comprises a shaft 4, which is connected to the turbine 2, a stator 5, a rotor 6, and a collector assembly 7.

The stator 5 represents a fixed armature and comprises a cylindrical core 10, two opposite heads 11a, 11b and a plurality of stator bars (not shown in the accompanying figures). The head 11a is arranged between the core 10 and the turbine 2.

The core 10 is provided with a plurality of axial slots (not shown in the accompanying figures). Each stator bar extends along a first segment substantially parallel to the axis A and inside a respective axial slot of the core 10 and along two segments in the area of the heads 11a, 11b.

The rotor 6 is housed inside the stator 5 and is coupled to the shaft 4 so as to rotate because it is dragged by the turbine 2.

In detail, the rotor 6 comprises a rotor winding, which is provided with a a plurality of conductors (not visible in the accompanying figures), which are defined by bars, commonly known as rotor winding bars. The rotor winding bars are arranged longitudinally on the rotor 6 in corresponding slots made along the rotor 6 and are provided with a strip connection 8 (partially shown in the accompanying figures).

When the rotor 6 is caused to rotate by the turbine 2, it generates a magnetic field, which generates, in the bars of the stator 5, an alternating voltage, which is made available by means of machine terminals (not shown) for the introduction into the network.

The alternator 3 is further provided with a cooling system, which is capable of removing the heat produced by the electric energy generation processes. In the non-limiting embodiment described and shown herein, the cooling system comprises a source (not shown in the accompanying figures), which is designed to supply a gas mixture almost entirely made of hydrogen to in areas facing the rotor 6 and the stator (air gap) and in suitable channels made in the rotor 6 and in the stator 5 (not shown in the accompanying figures). Preferably, the mixture supplied by the source is supplied at a pressure that is greater than the atmospheric pressure, so as to increase the heat exchange coefficient, compensate possible losses of load taking place in the channels of the rotor 6 and of the stator 5, and prevent air coming from the outside from getting into the alternator.

According to a variant that is not shown herein, the cooling system also comprises a water cooling system, which is designed to further cool down the stator.

According to a further variant, the source of the cooling circuit supplies air at a pressure that is greater than the atmospheric pressure.

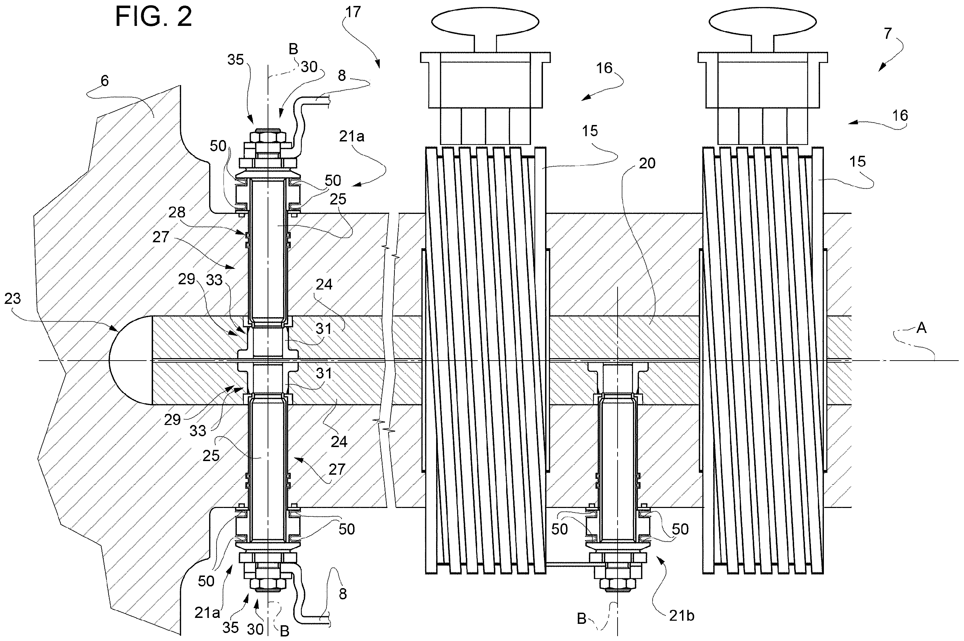

The collector assembly 7 receives the electric current from an external source 13 (schematically shown in figure 1), generally defined by an excitation system. The collector assembly 7 is arranged close to the head 11b and extends around an end portion 14 of the shaft 4, which is provided with two collector rings 15, which receive current from the external source 13 by means of a plurality of sliding contacts 16 (schematically shown in figure 2).

With reference to figure 2, the strip connections 8 of the rotor winding bars are electrically powered by means of a transmission system 17, which transmits electric current from the collector assembly 7 to the respective strip connection 8 of the rotor winding bar.

The transmission system 17 comprises a main conductor element 20, a plurality of first connecting elements 21a, which are designed to connect the main conductor element 20 to the strip connections 8, and a plurality of second connecting elements 21b (only one of them is visible in figure 2), which are designed to connect the main conductor element 20 to the collector rings 15.

In the non limiting example described and shown herein, there are two first connecting elements 21a, each connected to a respective strip connection 8, and there are also two second connecting elements 21b (even though only one of them in shown in figure 2), each connected to a respective collector ring 15.

The first connecting elements 21a and the second connecting elements 21b fulfil a double function: a mechanical coupling function, as they respectively fix the strip connections 8 and the collector rings 15 to the main conductor element 20 of the rotor 6, and an electric function, as they allow electric current to be transmitted among the strip connections 8, the collector rings 15 and the main conductor element 20.

The main conductor element 20 is arranged in an axial seat 23 of the rotor 6.

In particular, the axial seat 23 is substantially arranged at the centre of the rotor 6.

The main conductor element 20 is defined by two semicylindrical elements 24 coupled to one another.

In the non-limiting example described and shown herein, the first connecting elements 21a and the second connecting elements 21b have a structure that is substantially similar, except for differences due to the particular position and to the type of elements to be connected.

Hereinafter, we will describe the first connection elements 21a in a more detailed manner. Obviously, similar considerations also apply to the second connecting elements 21b.

The first connecting elements 21a are preferably arranged so as to be symmetrical relative to the longitudinal axis A of the rotor along respective radial directions.

Each first connecting element 21a comprises a main body 25 extending along an axis B and provided with a central portion 27, which engages a respective radial seat 28 of the rotor 6, a first end portion 29 fixed to the main conductor 20, and a second end portion 30, which is opposite to the first end portion 29 along the axis B and is fixed to the respective strip connection 8.

The first end portion 29 is threaded so as to be capable of being fixed to a respective bush 31, which is threaded on the inside and is arranged in a seat 33 obtained in the main conductor 20.

The second end portion 30 is preferably provided with a head 35, which is designed to fix the strip connection 8.

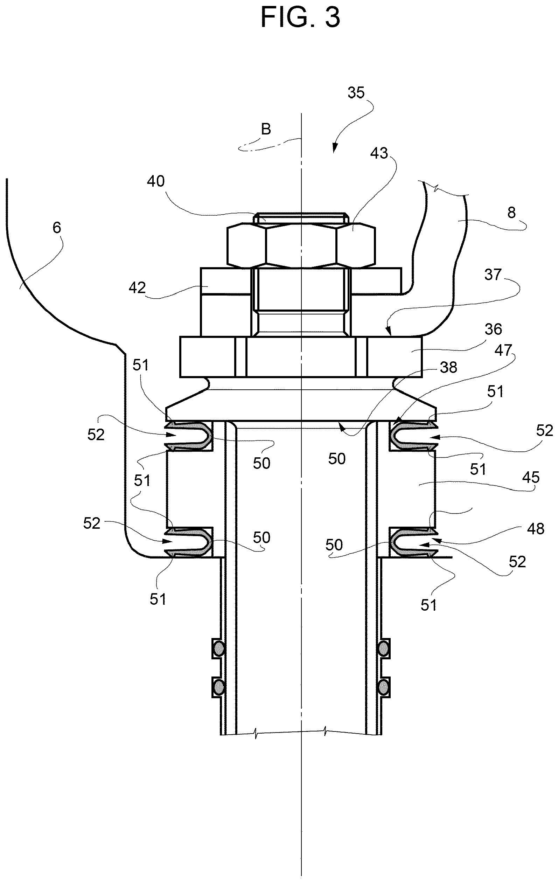

With reference to figure 3, which shows a non-limiting example of the invention, the head 35 comprises an abutment ring 36, which is orthogonal to the axis B and is larger than the main body 25, so as to define an upper annular abutment face 37 and a lower annular abutment face 38, a threaded portion 40, which projects from the upper annular abutment face 37 along the axis B, a fixing plate 42, which is fitted on the threaded portion 40, and a closing nut 43, which is screwed to the threaded portion 40.

In use, the strip connection 8 is arranged between the fixing plate 42 and the upper annular face 37.

The screwing of the closing nut 43 to the threaded portion 40 determines the clamping of the strip connection 8 between the two fixing plates 42.

The second end portion 30 is provided with a bush 45, which is arranged around the second end portion 30 between the head 35 and the rotor 6.

Indeed, the bush 45 is arranged so as to strike against the lower annular face 38 and against the outer surface of the rotor 6.

In the area of the end of the bush 45 in contact with the lower annular face 38 of the head 35, the bush 45 is provided with an annular seat 47.

In the area of the opposite end of the bush 45 in contact with the outer surface of the rotor 6, the bush 45 is provided with a further annular seat 48.

The annular seat 47 and the further annular seat 48 of the bush 45 are open along the side that faces the area extending between the rotor 6 and the stator 5.

In the non-limiting embodiment described and shown herein, the annular seat 47 and the further annular seat 48 are arranged at the ends of the bush 45, so that the annular seat 47 and the further annular seat 48 are respectively delimited by the lower annular face 38 of the head 35 and by the outer surface of the rotor 6.

The annular seat 47 and the further annular seat 48 are engaged by a respective sealing element 50.

The sealing element 50 substantially is a ring having a substantially C-shaped cross section. Therefore, the sealing element 50 defines two sealing lips 51 and an annular throat 62, which extends between the sealing lips 51.

The sealing element 50 extends substantially orthogonal to the axis B.

In detail, the sealing element 50 is arranged in the annular seats 47 and 48 so that the sealing lips 51 substantially extend orthogonal to the axis B in order to create a radial seal around the connecting element 8.

The sealing lips 51 have a constant radial extension relative to the axis B. In particular, the sealing lips 51 have a substantially identical radial extension.

The sealing element 50 is preferably made in such a way that its outer surface, which is designed to be arranged in contact with the bush 45 and with the lower annular face 38 or the outer surface of the rotor 6, has a surface roughness that is suited to ensure the sealing and is preferably lower than 3 µm.

The sealing element 50 is housed in the respective annular seats 47 and 48, so that the throat 52 faces the open part of the respective annular seat 47 and 48. In other words, the throat 52 is exposed to the area extending between the rotor 6 and the stator 5, where the cooling mixture circulates, which is supplied by the cooling system of the alternator 3. Basically, the throat 52 is oriented in such a way that the cooling mixture supplied by the cooling system of the alternator 3, which circulates in the area extending between the rotor 6 and the stator 5, can flow into the throat 52.

The cooling mixture circulates in the area between the rotor 6 and the stator 5 at a pressure that is greater than the atmospheric pressure. By so doing, the pressure of the mixture acts perpendicularly inside the throat 52 of the sealing element 50 and, therefore, it exerts a stress upon the sealing lips 51, thus increasing the contact pressure of the sealing lips 51 on the surfaces to be sealed.

A variant that is not shown herein comprises a sealing element with at least one spring arranged inside the throat 52 between the two sealing lips 51, in order to increase the specific pressure of the sealing lips 51 and make up for possible decreases in the pressure of the cooling mixture. Preferably, the spring arranged inside the throat 52 is an annular spring having a substantially U-shaped cross section. According to a variant, one or more helical springs are used.

Advantageously, when the alternator 3 is working, the aforesaid sealing elements 50 make sure that the cooling gas mixture does not reach dangerous areas where the mixture can be ignited, such as for example the area of the collector assembly 7 where the sliding contacts 16 often generate sparks.

This advantage is especially important in alternators 3 in which the cooling mixture contains hydrogen.

The use of second connecting elements 21b, which are substantially identical to the first connecting elements 21a, increases the safety and the reliability of the alternator 3, ensuring that the gas mixture does not leak into the area of the collector assembly 7, where the sliding contacts 16 are located.

According to a variant that is not shown herein, the strip connection 8 is coupled to a pair of connecting elements 21a to distribute the current among different elements.

Finally, it is clear that the connecting element and the alternator described herein can be subjected to changes and variations, without for this reason going beyond the scope of protection of the appended claims.

## Claims

1. Connecting element (21a; 21b) for an alternator (3) of an electric energy production plant (1); the alternator (3) extending along a longitudinal axis (A) and comprising a shaft (4), a stator (5), and a rotor (6); the connecting element (21a; 21b) comprising a first end portion (29) couplable to a main conductor (20) arranged inside an axial seat (23) of the rotor (6) of the alternator (3) and a second end portion (30) couplable to a respective conducting element (8; 15);
wherein the second end portion (30) of the connecting element (21a; 21b) is provided with at least one sealing element (50) having a substantially C-shaped cross section; wherein the sealing element (50) is a sealing ring arranged in an annular seat (47; 48) of the second end portion (29); wherein the annular seat (47; 48) is open along the periphery of the connecting element (21a; 21b) and is in communication with an area extending between the rotor (6) and the stator (5); the sealing element (50) comprising two sealing lips (51) and an annular throat (52), which defines the inner space of the C-shaped cross section extending between the sealing lips (51); the sealing element (50) being arranged in the annular seat (47; 48) so that the throat (52) is in communication with the open portion of the annular seat (47; 48), and so that the throat (52) is exposed to the area extending between the rotor (6) and the stator (5).

2. Connecting element according to any one of the foregoing claims, extending along an axis (B); the sealing element (50) extending orthogonal to the axis (B).

3. Connecting element according to any one of the foregoing claims, wherein the second end portion (30) comprises a head (35) configured to block the conducting element (8; 15).

4. Connecting element according to claim 3, wherein the head (35) comprises an abutting ring (36), a closing nut (43) and at least one fixing plate (42); the fixing plate (42) being arranged between the abutting ring (36) and the closing nut (43) and being configured to block the conducting element (8; 15).

5. Connecting element according to claim 3 or 4, wherein the second end portion (30) comprises a bush (45) arranged between the head (35) and the rotor (6).

6. Connecting element according to claim 5, wherein at least one sealing element (50) is arranged between the head (35) and the bush (45).

7. Connecting element according to claim 5 or 6, wherein at least one sealing element (50) is arranged between the bush (45) and the rotor (6).

8. Connecting element according to any one of the foregoing claims, wherein the sealing element (50) is provided with an outer surface having a surface roughness lower than 3 µm.

9. Alternator for an electric energy production plant (1) comprising:
• a rotor (6) extending along a longitudinal axis (A) ;
• a main conductor (20) arranged inside the axial seat (23) of the rotor (6);
• at least one conducting element (8; 15);
• at least one first connecting element (21a; 21b), which connects the main conductor (20) and the respective conducting element (8; 15) and has the features claimed in anyone of the foregoing claims.

10. Alternator according to claim 9, wherein the conducting element (8; 15) is a strip connection (8) of a rotor winding bar.

11. Alternator according to claim 9, wherein the conducting element (8; 15) is a collector ring (15).

## Patentansprüche

1. Verbindungselement (21a; 21b) für einen Generator (3) einer Elektroenergie-Erzeugungsanlage (1); wobei sich der Generator (3) entlang einer Längsachse (A) erstreckt und eine Welle (4), einen Stator (5) und einen Rotor (6) umfasst; wobei das Verbindungselement (21a; 21b) einen ersten Endabschnitt (29), der mit einem innerhalb eines axialen Sitzes (23) des Rotors (6) des Generators (3) angeordneten Hauptleiter (20) verbindbar ist, und einen mit einem entsprechenden leitenden Element (8; 15) koppelbaren zweiten Endabschnitt (30) umfasst; wobei der zweite Endabschnitt (30) des Verbindungselements (21a; 21b) mit wenigstens einem Dichtungselement (50) versehen ist, das einen im Wesentlichen C-förmigen Querschnitt aufweist; wobei das Dichtungselement (50) ein Dichtungsring ist, der in einem ringförmigen Sitz (47; 48) des zweiten Endabschnitts (29) angeordnet ist; wobei der ringförmige Sitz (47; 48) entlang des Umfangs des Verbindungselements (21a; 21b) offen ist und mit einem Bereich in Verbindung steht, der sich zwischen dem Rotor (6) und dem Stator (5) erstreckt; wobei das Dichtungselement (50) zwei Dichtlippen (51) und eine ringförmige Kehle (52) umfasst, die den Innenraum des C-förmigen Querschnitts definiert, der sich zwischen den Dichtlippen (51) erstreckt; wobei das Dichtungselement (50) in dem ringförmigen Sitz (47; 48) so angeordnet ist, dass die Kehle (52) mit dem offenen Abschnitt des ringförmigen Sitzes (47; 48) in Verbindung steht, und so, dass die Kehle (52) dem Bereich ausgesetzt ist, der sich zwischen dem Rotor (6) und dem Stator (5) erstreckt.

2. Verbindungselement nach einem der vorangehenden Ansprüche, das sich entlang einer Achse (B) erstreckt; wobei sich das Dichtungselement (50) orthogonal zu der Achse (B) erstreckt.

3. Verbindungselement nach einem der vorangehenden Ansprüche, wobei der zweite Endabschnitt (30) einen Kopf (35) umfasst, der dafür konfiguriert, das leitende Element (8; 15) zu blockieren.

4. Verbindungselement nach Anspruch 3, wobei der Kopf (35) einen Anschlagring (36), eine Verschlussmutter (43) und wenigstens eine Befestigungsscheibe (42) umfasst; wobei die Befestigungsscheibe (42) zwischen dem Anschlagring (36) und der Verschlussmutter (43) angeordnet ist und dafür konfiguriert ist, das leitende Element (8; 15) zu blockieren.

5. Verbindungselement nach Anspruch 3 oder 4, wobei der zweite Endabschnitt (30) eine Hülse (45) umfasst, die zwischen dem Kopf (35) und dem Rotor (6) angeordnet ist.

6. Verbindungselement nach Anspruch 5, wobei wenigstens ein Dichtungselement (50) zwischen dem Kopf (35) und der Hülse (45) angeordnet ist.

7. Verbindungselement nach Anspruch 5 oder 6, wobei wenigstens ein Dichtungselement (50) zwischen der Hülse (45) und dem Rotor (6) angeordnet ist.

8. Verbindungselement nach einem der vorangehenden Ansprüche, wobei das Dichtungselement (50) mit einer Außenfläche versehen ist, die eine Oberflächenrauheit von weniger als 3 µm aufweist.

9. Generator für eine Elektroenergie-Erzeugungsanlage (1), umfassend:
• einen Rotor (6), der sich entlang einer Längsachse (A) erstreckt;
• einen Hauptleiter (20), der innerhalb des axialen Sitzes (23) des Rotors (6) angeordnet ist;
• wenigstens ein leitendes Element (8; 15);
• wenigstens ein erstes Verbindungselement (21a; 21b), das den Hauptleiter (20) und das jeweilige leitende Element (8; 15) verbindet und die in einem der vorangehenden Ansprüche beanspruchten Merkmale aufweist.

10. Generator nach Anspruch 9, wobei das leitende Element (8; 15) eine Bandverbindung (8) eines Rotorwicklungsstabes ist.

11. Generator nach Anspruch 9, wobei das leitende Element (8; 15) ein Schleifring (15) ist.

## Revendications

1. Elément de connexion (21a ; 21b) pour un alternateur (3) d'une installation de production d'énergie électrique (1) ; l'alternateur (3) s'étendant le long d'un axe longitudinal (A) et comprenant un arbre (4), un stator (5) et un rotor (6) ; l'élément de connexion (21a; 21b) comprenant une première partie d'extrémité (29) pouvant être couplée à un conducteur principal (20) disposé à l'intérieur d'un siège axial (23) du rotor (6) de l'alternateur (3) et une seconde partie d'extrémité (30) pouvant être couplée à un élément conducteur respectif (8; 15) ;
dans lequel la seconde partie d'extrémité (30) de l'élément de connexion (21a ; 21b) est pourvue d'au moins un élément d'étanchéité (50) ayant une section transversale sensiblement en forme de C ; dans lequel l'élément d'étanchéité (50) est une bague d'étanchéité disposée dans un siège annulaire (47 ; 48) de la seconde partie d'extrémité (29) ; dans lequel le siège annulaire (47 ; 48) est ouvert le long de la périphérie de l'élément de connexion (21a; 21b) et est en communication avec une zone s'étendant entre le rotor (6) et le stator (5) ; l'élément d'étanchéité (50) comprenant deux lèvres d'étanchéité (51) et une gorge annulaire (52), qui définit l'espace intérieur de la section transversale en forme de C s'étendant entre les lèvres d'étanchéité (51) ; l'élément d'étanchéité (50) étant disposé dans le siège annulaire (47 ; 48) de sorte que la gorge (52) est en communication avec la partie ouverte du siège annulaire (47 ; 48), et de sorte que la gorge (52) est exposée à la zone s'étendant entre le rotor (6) et le stator (5).

2. Elément de connexion selon l'une quelconque des revendications précédentes, s'étendant le long d'un axe (B) ; l'élément d'étanchéité (50) s'étendant orthogonalement à l'axe (B).

3. Elément de connexion selon l'une quelconque des revendications précédentes, dans lequel la seconde partie d'extrémité (30) comprend une tête (35) configurée pour bloquer l'élément conducteur (8 ; 15).

4. Elément de connexion selon la revendication 3, dans lequel la tête (35) comprend une bague de butée (36), un écrou de fermeture (43) et au moins une plaque de fixation (42) ; la plaque de fixation (42) étant disposée entre la bague de butée (36) et l'écrou de fermeture (43) et étant configurée pour bloquer l'élément conducteur (8 ; 15).

5. Elément de connexion selon la revendication 3 ou 4, dans lequel la seconde partie d'extrémité (30) comprend une bague (45) disposée entre la tête (35) et le rotor (6).

6. Elément de connexion selon la revendication 5, dans lequel au moins un élément d'étanchéité (50) est disposé entre la tête (35) et la bague (45).

7. Elément de connexion selon la revendication 5 ou 6, dans lequel au moins un élément d'étanchéité (50) est disposé entre la bague (45) et le rotor (6).

8. Élément de connexion selon l'une quelconque des revendications précédentes, dans lequel l'élément d'étanchéité (50) est pourvu d'une surface extérieure présentant une rugosité de surface inférieure à 3 µm.

9. Alternateur pour une installation de production d'énergie électrique (1) comprenant :
• un rotor (6) s'étendant le long d'un axe longitudinal (A) ;
• un conducteur principal (20) disposé à l'intérieur du siège axial (23) du rotor (6) ;
• au moins un élément conducteur (8 ; 15) ;
• au moins un premier élément de connexion (21a; 21b), qui relie le conducteur principal (20) et l'élément conducteur respectif (8; 15) et présente les caractéristiques revendiquées dans l'une quelconque des revendications précédentes.

10. Alternateur selon la revendication 9, dans lequel l'élément conducteur (8 ; 15) est une bande de connexion (8) d'une barre d'enroulement de rotor.

11. Alternateur selon la revendication 9, dans lequel l'élément conducteur (8 ; 15) est une bague collectrice (15).
